# EUROPEAN PATENT SPECIFICATION

(11) **EP 0 996 939 B1**
(45) Date of publication and mention of the grant of the patent: **22.12.2004**
(21) Application number: 98929402.0
(22) Date of filing: 28.05.1998
(51) Int. Cl.: G07F 19/00

(54) **A SYSTEM FOR CONTROLLING TRANSACTIONS ON COMMUNICATION NETWORKS**
SYSTEM ZUR STEUERUNG VON TRANSAKTIONEN IN KOMMUNIKATIONSNETZWERKEN
SYSTEME DE COMMANDE DE TRANSACTIONS SUR DES RESEAUX DE COMMUNICATION

(30) Priority: 23.06.1997 IT TO970546
(43) Date of publication of application: 03.05.2000
(73) Proprietor: Peretti, Giulio, 10090 Castiglione Torinese (Torino) (IT)
(72) Inventor: Peretti, Giulio, 10090 Castiglione Torinese (Torino) (IT)
(74) Representative: Quinterno, Giuseppe
(86) International application number: PCT/EP1998/003200
(87) International publication number: WO 1998/059455

(56) References cited:
- EP-A- 0 501 697
- EP-A- 0 618 539
- EP-A- 0 658 862
- EP-A- 0 812 081
- EP-A- 0 848 361
- WO-A-97/03410
- US-A- 5 311 572
- SIRBU M ET AL: "NETBILL: AN INTERNET COMMERCE SYSTEM OPTIMIZED FOR NETWORK DELIVERED SERVICES" DIGEST OF PAPERS OF THE COMPUTER SOCIETY COMPUTER CONFERENCE (SPRING) COMPCON, TECHNOLOGIES FOR THE INFORMATION SUPERHIGHWAY SAN FRANCISCO, MAR. 5 - 9, 1995, no. CONF. 40, 5 March 1995, pages 20-25, XP000577034 INSTITUTE OF ELECTRICAL AND ELECTRONICS ENGINEERS
- GIFFORD D K ET AL: "PAYMENT SWITCHES FOR OPEN NETWORKS" DIGEST OF PAPERS OF THE COMPUTER SOCIETY COMPUTER CONFERENCE (SPRING) COMPCON, TECHNOLOGIES FOR THE INFORMATION SUPERHIGHWAY SAN FRANCISCO, MAR. 5 - 9, 1995, no. CONF. 40, 5 March 1995, pages 26-31, XP000577008 INSTITUTE OF ELECTRICAL AND ELECTRONICS ENGINEERS

## Description

The present invention addresses the problem of controlling transactions on communication networks such as - for example - the internet.

A network such as the internet is a large world communication network spread widely over the entire planet and interconnects computer networks owned by public bodies, companies and private individuals. It is thus an integrated structure, the users of which can theoretically be divided into two categories: suppliers of information who use computers connected to the network for publicizing information or selling products and/or services and users who use computers to access information available on the network in order to purchase the products or services offered or simply to communicate with one another.

In fact, the internet currently already offers very varied services mainly connected with commercial and cultural information and entertainment (and the situation is destined to develop further in this direction); it is also possible to examine products for sale and to purchase them. In almost all cases, conventional means are used for payment (for example: cash on delivery, credit transfers or bank payments, charging of accounts held with the vendor by the purchaser of the goods or service, credit cards, etc.).

WO-A-9703410 discloses a method of billing for commercial transactions over the Internet, in particular for handling on the Internet a large number of small-sized transactions. Thereby a new business opportunity for telephone companies and existing Internet access providers is created. The method includes the steps of
- connecting the customer to the Internet,
- exchanging between the customer and vendor transaction information; this exchange may include identifying information relating to the customer, such as the customer's Internet address,
- receiving the transaction information by the provider; the provider can extract the information from the exchange of information taking place between the customer and the vendor through the provider's equipment; the provider can then send verifying information to one or both of the customer and vendor to indicate that the transaction has been approved;
- delivering of the products or service to the customer and billing the appropriate customer account by the provider; the approval can be signified over the Internet and most preferably during the communication between the customer and the vendor.

All the prior solutions suffer to a greater or lesser extent from problems arising from the possible slowness of the service and from safety aspects which in turn can give rise to further delays. In particular, for the person offering the product or the service, there is the problem of checking that the purchaser is making or has made the payment and/or that the purchaser is in fact a person interested in the purchase and not a person committing an illegal act and/or a nuisance. Conversely, the purchaser or potential purchaser may have reasons for being unwilling to input "sensitive" data such as, for example, a credit-card number, into the network since he is aware - particularly as a result of warnings which appear repeatedly on the network - that the network cannot ensure conditions of absolute discretion in relation to such data.

Moreover, there is the problem that all of the forms of payment described above presuppose the need for access to and/or availability of specific instruments of payment which may differ from one country to another. Although they are normally available to a commercial user, these instruments may not be available to a private person who purchases certain goods and services occasionally, generally for a small sum, (a so-called "minipayment"). Since it is inconceivable that such a user would provide himself with what is required specifically to effect irregular payments of small amounts, the consequence is very clearly that the person usually gives up the possible purchase.

The object of the present invention, which has the characteristics defined in claim 1, is to provide a radical solution to the problems mentioned above.

Its implementation is based essentially on the recognition of the fact that any user connected to a communication network such as the internet is connected by means of a telephone terminal and hence by means of a subscriber point intrinsically arranged for counting and charging calls made.

Another aspect of the solution according to the invention makes use of the presence on the network of so-called "sales managers" which are associated with banks, and which constitute respective internet sites to which suppliers and vendors are connected so that it is possible to input into the network the codes of the various products/services offered, electronic forms describing the characteristics and the price, as well as the actual product, if it is a product which can be sold by means of the internet.

According to a preferred embodiment of the invention, the customer selects the product and orders it by introducing himself, the manager sends him the product/service directly, if it can be delivered by means of the internet, or passes the order to the vendor who provides for delivery. The cost is automatically charged on the bill on which calls are charged, without the need to establish contracts beforehand, for example, with a banking institution, etc.

The solution according to the invention permits checking in real time of an unambiguous and unmistakable match between the data by which the caller introduces himself to the virtual store and the number or code of the line connecting him to the internet. From this point of view, the preferred solution is that of the transmission of an element identifying the caller (for example, the telephone number of the telephone connection) to the recipient of the call.

The invention will now be described, purely by way of nonlimiting example, with reference to the appended drawings, in which:
Figure 1 shows schematically a possible configuration of the system according to the invention,
Figure 2 shows schematically the possible arrangement of the respective service, in the form of a block diagram, and
Figures 3 to 13 show successive possible stages of the man-machine dialogue characteristic of the system according to the invention.

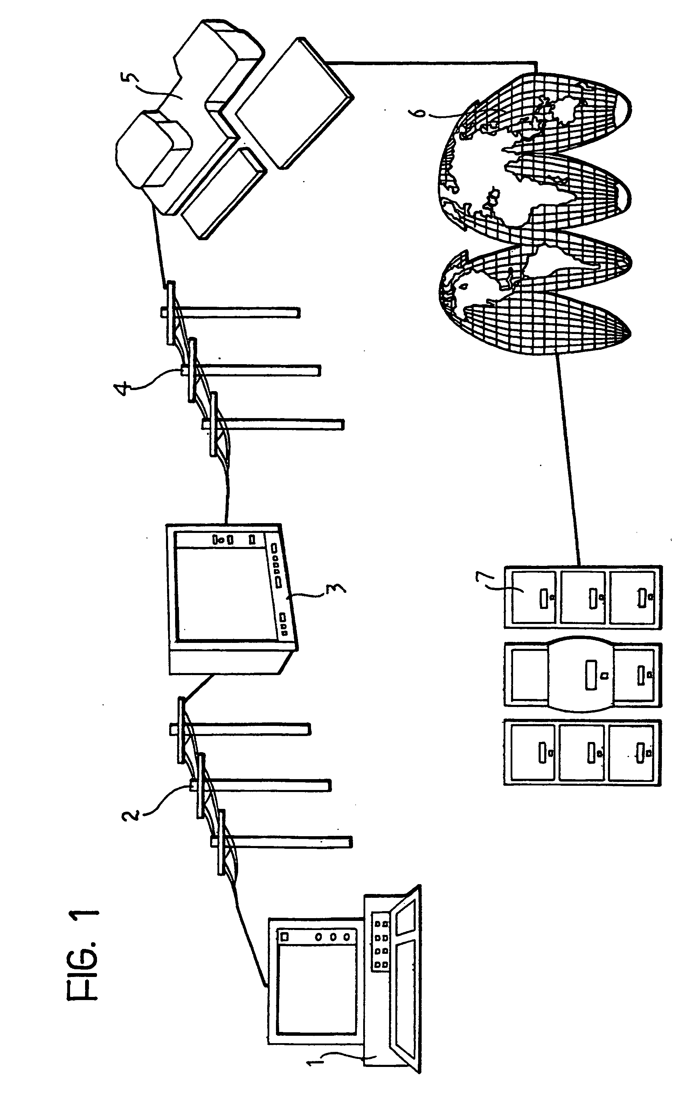

Figure 1 shows a typical configuration of the connection of a terminal 1 to a communication network 6. Specifically, the terminal 1 (which will be assumed below to be used by the user of the system according to the invention, or purchaser) is connected to a so-called service provider 5 by means of a system of lines 2, 4 controlled by a body (a telephone company or the like) acting as a line manager 3 and as a user-checking body. The provider connects the said user, by means of the internet network 6 or an equivalent communication network, to a so-called virtual store 7, constituted by another terminal or group of terminals which is connected to the network 6 and which offers certain goods or services to the user/purchaser by presenting them on a respective site or group of sites.

The above-described method of connection may be considered widely known in the art and does not therefore require further description herein.

Briefly, the system according to the invention is used on the basis of the following methods.

The user is connected to the network 6 by means of his manager 3 and the respective lines 2, 4 as well as his provider 5. By navigating on the network, he discovers the site or set of sites connected to the vendor and, after viewing the various electronic pages of the site or sites in question, decides to purchase a certain produce/service which interests him.

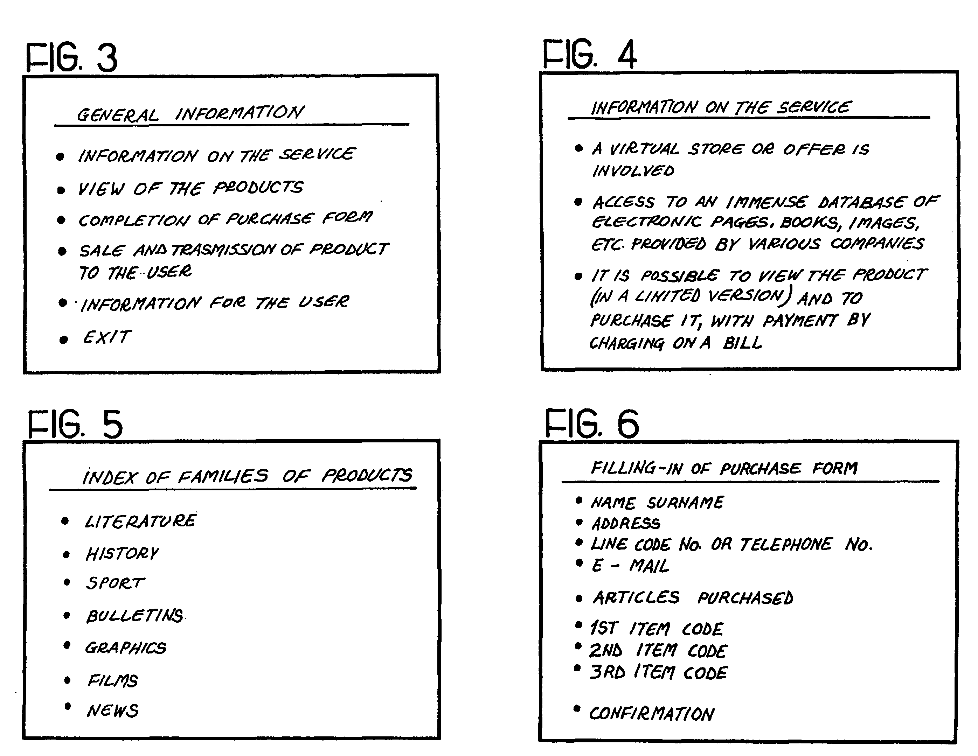

He then goes on to fill in the purchase form (shown in Figure 6) by inserting his particulars, including the code of his line or telephone number (or equivalent identification).

At this point, upon receipt of the respective message, the sales manager sends a request to the line manager 3 to check that the identification supplied actually corresponds to the code or telephone number of the user connected to the site.

Upon receipt of this information (which can be regarded essentially as a consent datum for the transaction), the vendor compares it with that input by the user and, if it corresponds (positive consent datum) implements or puts into effect the procedure relating to the supply of the product/service purchased. If it does not correspond (negative consent datum) a data-inconsistency message is sent to the purchasing user, usually accompanied by an invitation to repeat the purchasing formalities, a final refusal being implemented only when the inconsistency condition - which condition puts in doubt the actual identity/legitimacy of the person introducing himself as the purchaser - has been confirmed one or more times. Naturally, in these conditions, the purchasing user can choose to disconnect himself from the site or to re-key the correct code which will permit transmission of the material.

However, it is clear that at least some of the aforementioned comparison and transaction-consent operations, etc., may also be entrusted to the manager 3 so that a single body may combine the functions of the entities indicated 3 and 5 or 3, 5 and 7 herein.

Upon completion of the connection with the user, the sales manager transmits to the line manager 3 the data relating to the user for charging on the bill.

As well as being very convenient for the purchaser, the system according to the invention thus offers better safety margins than, for example, a purchase made with a credit card. This is because the purchase and the charging take place only after the user's line has actually been checked in real time and without the transmission of codes or credit-card numbers which could be used fraudulently or detected in unauthorized manner by third parties.

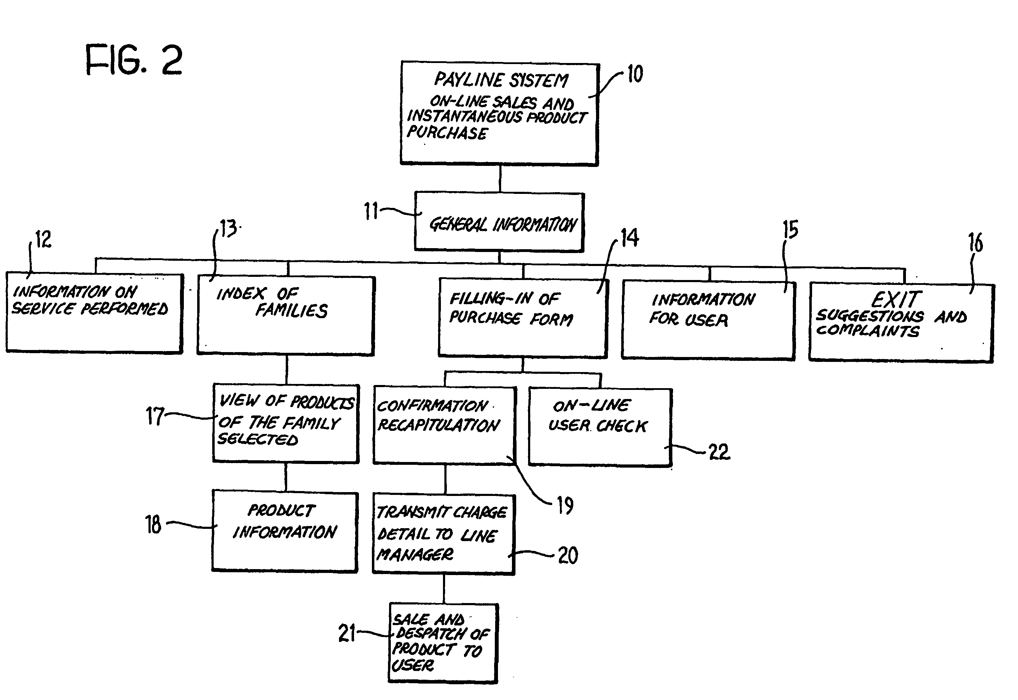

The diagram of Figure 2 is a general view of the main functions necessary for the full and preferred implementation of the system according to the invention. This implementation is carried out in an internet context in accordance with known criteria which do not need to be described in detail herein.

In general, the system is configured with a manager unit 10 (which is usually resident with the so-called vendor 7 but may also be located with the line manager 3) for developing and supplying to the user a set of information consisting essentially of the following components:
- general information 11,
- information relating to the service performed 12,
- index of the families of products/services 13,
- method of filling in the purchase form 14,
- information for the user 15,
- exit function possibly with suggestions and complaints function 16.

The families index 13 is then divided into sub-functions such as a view 17 of the products/information relating to the services supplied of the family selected, with further functions, for example, a function 18 for looking up and displaying the product.

In addition to the on-line user-checking function 22 (in accordance with the criteria described above), the function 14 for filling in the purchase form also provides, in general, for a recapitulation and confirmation function 19, a function 20 for transmitting the charging details to the manager 3, as well as for functions 21 for taking the necessary action for the supply of the product/service to the customer.

Figures 3 to 13 show some of the functions in question in the form of possible exemplary "displays" which may appear on the user interface.

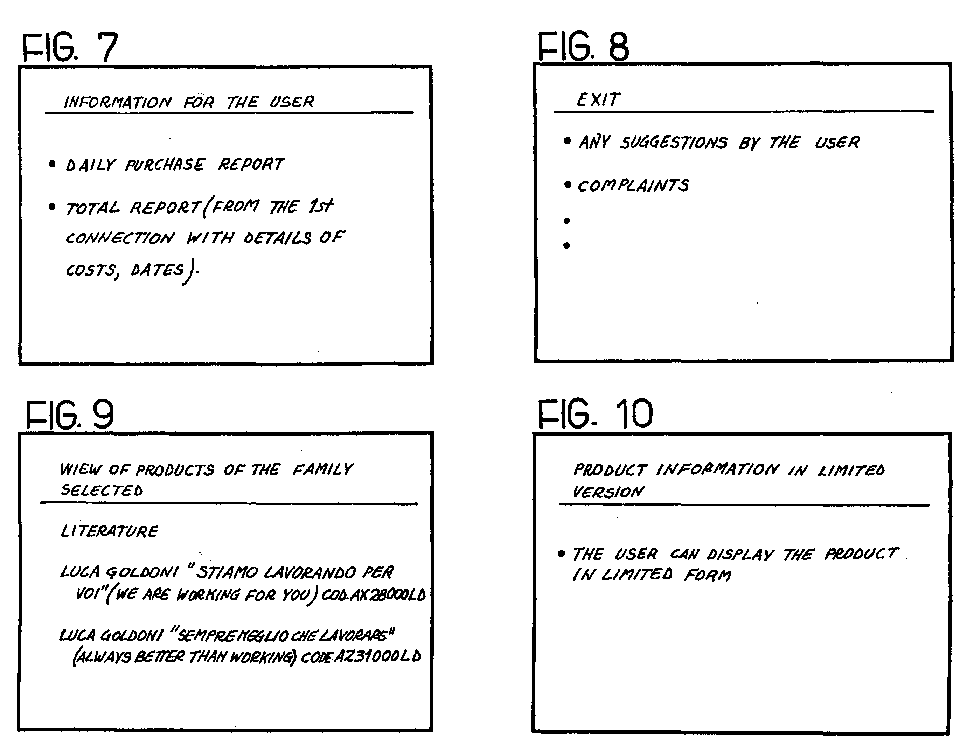

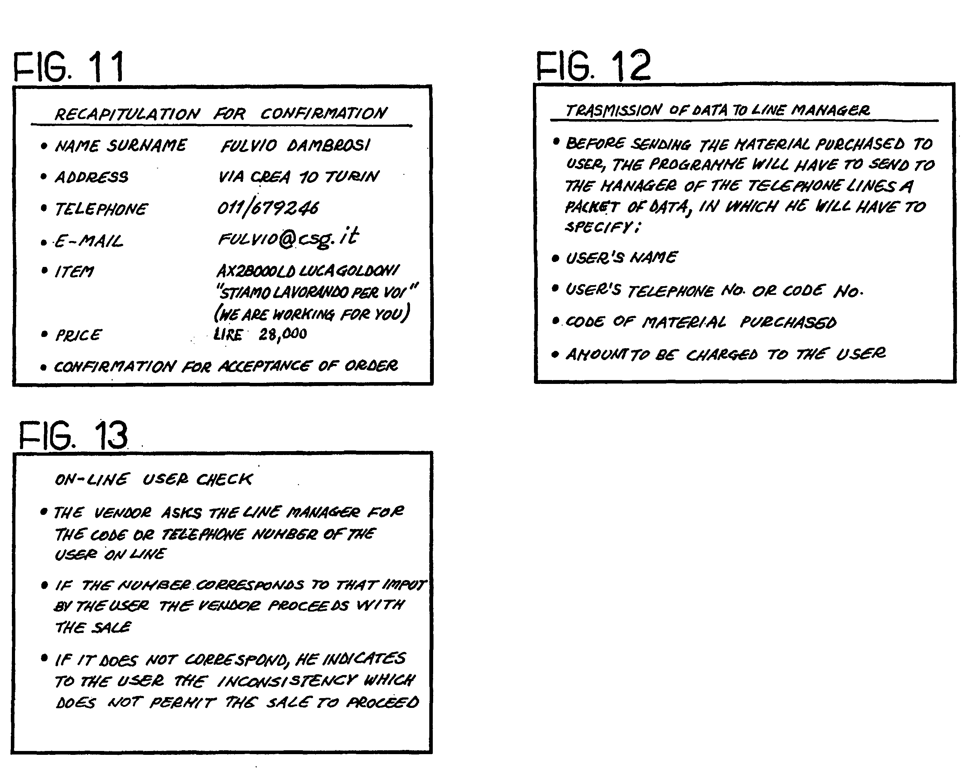

More specifically, these are the following functions:
- general information 11 (Figure 3),
- information on the service performed 12 (Figure 4),
- index of the families of products 13 (Figure 5),
- filling-in of the purchase form 14 (Figure 6),
- information for the user 15 (Figure 7),
- exit 16 (Figure 8)
- view of products of the family selected 17 (Figure 9),
- product information 18 (Figure 10),
- recapitulation for confirmation 19 (Figure 11),
- transmission of data to line manager 20 (Figure 12), and
- on-line user check 22 (Figure 13).

## Claims

1. A system for controlling transactions on a communication network (6) with a plurality of users connected to the network (6) by means of at least one line manager (3), comprising:
- user interface means (1) for enabling at least one of the plurality of users who may act as a user purchasing products and/or services to provide a virtual store (7) at least. one respective identification characteristic of the connection of the purchasing user to the network (6) via the at least one said line manager (3);
- said virtual store (7) enabling at least one other of the plurality of users to take on the role of a supplier of the products and/or services,
- checking means for checking in real time an unambiguous and unmistakable match between the respective identification characteristic of the connection of the purchasing user provided to the virtual store and the number or code of the line connecting the purchasing user to the network (6) via the at least one line manager (3) in order to generate a corresponding datum of consent to a transaction in dependence on said match, and to put into effect the supply of the products and/or services to the purchasing user.

2. A system according to Claim 1, **characterised in that** the first user-interface means (1) are predisposed to send to the /1 line manager (3), as a result of the generation of the datum of consent to the transaction, a respective charge datum corresponding to the products and/or services supplied, and **in that** the line manager (3) is predisposed to charge a sum corresponding to the charge datum to the purchasing user in a manner co-ordinated with the charging of the connection of the purchasing user to the line manager (3).

3. A system according to Claim 2, **characterised in that** the charging takes place by means of a bill.

4. A system according to any one of Claims 1 to 3, **characterised in that** the first user interface means (1) are configured for:
- detecting the provision of the said at least one respective identification characteristic by the purchasing user at the time in question, and
- transmitting to the line manager (3) a request for the issue of the datum of consent to the transaction.

## Patentansprüche

1. System zur Steuerung von Transaktionen in einem Kommunikationsnetzwerk (6) mit einer Mehrzahl von Benutzern, die mittels zumindest eines Leitungsmanagers (3) mit dem Netzwerk (6) verbunden sind, umfassend:
- Benutzeroberflächenmittel (1), um zu ermöglichen, dass für zumindest einen aus der Mehrzahl von Benutzern, welcher als Produkte und/oder Dienstleistungen erwerbender Benutzer agieren kann, ein virtueller Laden (7) bereitgestellt wird, mit zumindest einem entsprechenden Identifikationskennzeichen der Verbindung des erwerbenden Benutzers mit dem Netzwerk (6) über den zumindest einen Leitungsmanager (3);
- wobei der virtuelle Laden (7) ermöglicht, dass zumindest ein anderer aus der Mehrzahl von Benutzern die Rolle eines Lieferanten der Produkte und/oder Dienstleistungen übernimmt,
- Kontrollmittel, um in Echtzeit eine eindeutige und unverwechselbare Übereinstimmung zwischen dem jeweiligen Identifikationskennzeichen der Verbindung des erwerbenden Benutzers, für den der virtuelle Laden bereitgestellt ist, und der Nummer oder des Codes der Leitung, die den erwerbenden Benutzer über den zumindest einen Leitungsmanager (3) mit dem Netzwerk (6) verbindet, zu überprüfen, um in Abhängigkeit von der Übereinstimmung einen entsprechenden Richtwert für die Zustimmung zur Transaktion zu generieren und um die Lieferung der Produkte und/oder Dienstleistungen an den erwerbenden Benutzer in Gang zu setzen.

2. System gemäß Anspruch 1, **dadurch gekennzeichnet, dass** die ersten Benutzeroberflächenmittel (1) dafür prädisponiert sind, dem Leitungsmanager (3) infolge der Generierung des Richtwerts für die Zustimmung zur Transaktion einen entsprechenden Gebührenrichtwert zuzusenden, welcher mit den gelieferten Produkten und/oder Dienstleistungen übereinstimmt, und dass der Leitungsmanager (3) dafür prädisponiert ist, dem erwerbenden Benutzer eine mit dem Gebührenrichtwert übereinstimmende Summe zu verrechnen, und zwar in einer Weise, die auf das Verrechnen der Verbindung des erwerbenden Benutzers mit dem Leitungsmanager (3) abgestimmt ist.

3. System gemäß Anspruch 2, **dadurch gekennzeichnet, dass** das Verrechnen mittels einer Rechnung erfolgt.

4. System gemäß einem der Ansprüche 1 bis 3, **dadurch gekennzeichnet, dass** die ersten Benutzeroberflächenmittel (1) konfiguriert sind für:
- das Ermitteln der Bereitstellung des zumindest einen entsprechenden Identifikationskennzeichens durch den erwerbenden Benutzer zum fraglichen Zeitpunkt, und
- das Übermitteln einer Anfrage an den Leitungsmanager (3) betreffend das Herausgeben des Richtwerts für die Zustimmung zur Transaktion.

## Revendications

1. Système pour commander des transactions sur un réseau de communication (6), une pluralité d'utilisateurs étant connectés au réseau (6) au moyen d'au moins un directeur des services (3), comprenant :
- des moyens formant interface utilisateur (1) pour permettre à au moins l'un de la pluralité d'utilisateurs qui peut agir en tant qu'utilisateur approvisionnant des produits et/ou des services de fournir à un magasin virtuel (7) au moins une caractéristique d'identification respective de la connexion de l'utilisateur approvisionnant au réseau (6) par l'intermédiaire dudit au moins un directeur des services (3) ;
- ledit magasin virtuel (7) permettant à au moins un autre de la pluralité d'utilisateurs de prendre le rôle d'un fournisseur des produits et/ou services ;
- des moyens de contrôle pour contrôler en temps réel une correspondance non ambiguë et indubitable entre la caractéristique d'identification respective de la connexion de l'utilisateur approvisionnant fournie au magasin virtuel et le numéro ou le code de la ligne connectant l'utilisateur approvisionnant au réseau (6) par l'intermédiaire dudit au moins un directeur des services (3) afin de générer une référence de consentement correspondante à une transaction en fonction de ladite correspondance et pour mettre en application la fourniture des produits et/ou services à l'utilisateur approvisionnant.

2. Système selon la revendication 1, **caractérisé en ce que** les premiers moyens formant interface utilisateur (1) sont prédisposés à envoyer au directeur des services (3), en conséquence de la génération de la référence de consentement à la transaction, une référence de facturation respective correspondant aux produits et/ou services fournis, et **en ce que** le directeur des services (3) est prédisposé à facturer une somme correspondant à la référence de facturation à l'utilisateur approvisionnant d'une manière coordonnée avec la facturation de la connexion de l'utilisateur approvisionnant au directeur des services (3).

3. Système selon la revendication 2, **caractérisé en ce que** la facturation s'effectue au moyen d'une facture.

4. Système selon l'une quelconque des revendications 1 à 3, **caractérisé en ce que** les premiers moyens formant interface utilisateur (1) sont configurés pour :
- détecter la fourniture de ladite au moins une caractéristique d'identification respective par l'utilisateur référence à l'instant en question, et
- transmettre au directeur des services (3) une demande pour l'émission de la référence de consentement à la transaction.
